(19) Europäisches Patentamt
European Patent Office
Office européen des brevets

(11) **EP 3 205 557 A1**

(12) **EUROPEAN PATENT APPLICATION**

(43) Date of publication:
**16.08.2017 Bulletin 2017/33**

(51) Int Cl.:
**B62D 1/06** *(2006.01)*　　**B62D 1/04** *(2006.01)*

(21) Application number: **16305156.8**

(22) Date of filing: **11.02.2016**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD** | (71) Applicant: **Thomson Licensing**<br>**92130 Issy-les-Moulineaux (FR)**<br><br>(72) Inventor: **Brune, Thomas**<br>**30449 Hannover (DE)**<br><br>(74) Representative: **Huchet, Anne et al**<br>**TECHNICOLOR**<br>**1-5, rue Jeanne d'Arc**<br>**92130 Issy-les-Moulineaux (FR)** |

(54) **A DISPLAY DEVICE FOR A STEERING WHEEL AND A SYSTEM TO DISPLAY INFORMATION CONTENT ON A STEERING WHEEL**

(57)　　A system (20) configured to display information content on a steering wheel and a display device (12) for a steering wheel (10) are described. The system comprises: an angle measurement unit (21) configured to identify a rotation angle of the steering wheel, a rendering unit (22) configured to receive the measured rotation angle and the information content to be displayed, and a display device (23). The display device has a shape of a ring and comprise an upper zone (121) and a bottom zone (122) for displaying information content. The displayed information content in the upper zone (121) and in the bottom zone (122) are both vertically aligned with respect to the display device.

Fig. 3

EP 3 205 557 A1

**Description**

**TECHNICAL FIELD**

The present disclosure relates to a display device for a steering wheel and a system configured to display information content on a steering wheel. Especially, the proposed display device can be applied in the field of automotive, game controller, etc.

**BACKGROUND**

In the fields and applications of smart cars, new display technologies are investigated to get information to the eyes of the car driver without refracting drivers' focus from front window view too much. For example, there are prototypes and products of head-up displays (HUB). Besides, there are also wheel based solutions for such demands of new displays such as BMW M Performance Steering Wheel with digital display, FARRINGDON SWIS Steering Wheels, and AiM GT Steering Wheel, etc.

However, there are some problems and disadvantages for the wheel based displays available nowadays. For example, when a driver turns the steering wheel, the display attach thereto and also the displayed text would be turned out of position or even out of the driver's sight as well. This can lead to distraction and confusion for the driver and thus reduce the safety.

**SUMMARY**

Therefore, it is an object to provide a solution for a display suitable to be used on a steering wheel in a vehicle such that information can be displayed stationary, even when the steering wheel is turned by the driver.

According to one embodiment, a display device for a steering wheel is proposed. The display device has a shape of a ring and comprise upper zone and a bottom zone for displaying information content. The displayed information content in the upper zone and in the bottom zone are both vertically aligned with respect to the display device. Especially, the information content displayed in the upper zone and the information content displayed in the bottom zone are vertically flipped with respect to each other. When the display device is turned or rotated, the information content in the upper zone and bottom zone are still centrically displayed.

In one embodiment, the display device is split up to an upper 180° display type and a lower 180° display type with respect to fitting points of the display device. if parts of the information content rendered to a 180° display type exceeds the fitting points of the display, the parts of the information content is rendered to the other 180° display type.

According to one embodiment, a system configured to display information content on a steering wheel is introduced. The system comprises: an angle measurement unit (21) configured to identify a rotation angle of the steering wheel, a rendering unit (22) configured to receive the measured rotation angle and the information content to be displayed, and a display device.

Same or similar advantages, which have been mentioned with respect to the display device according to the current principles, apply to the system in the same or similar way.

Further characteristics of the present solution will become apparent from the description of the embodiments together with the claims and the included drawings. Embodiments can fulfill individual characteristics or a combination of several characteristics.

**BRIEF DESCRIPTION OF THE DRAWINGS**

Fig. 1    depicts an embodiment of a display device for a steering wheel according to the present principles.

Fig. 2    depicts an exemplary situation when the display device shown in Fig. 1 is turned according to the present principles.

Fig. 3    schematically depicts one embodiment of a system to provide a display device for a steering wheel according to the present principles.

Fig. 4    shows an exemplary encoder used as an angle measurement unit in the system shown in Fig. 3 according to the present principles.

Fig. 5      shows an exemplary inertial measurement unit used as an angle measurement unit in the system shown in Fig. 3 according to the present principles.

Fig. 6      shows an exemplary embodiment illustrating how the system shown in Fig. 3 works according to the present principles.

## DETAILED DESCRIPTION OF PREFERRED EMBODIMENTS

For a better understanding the proposed solutions shall now be explained in more detail in the following description with reference to the figures. It is understood that the solutions are not limited to the disclosed exemplary embodiments and that specified features can also expediently be combined and/or modified without departing from the scope of the proposed solutions as defined in the appended claims and exhibited in the figures.

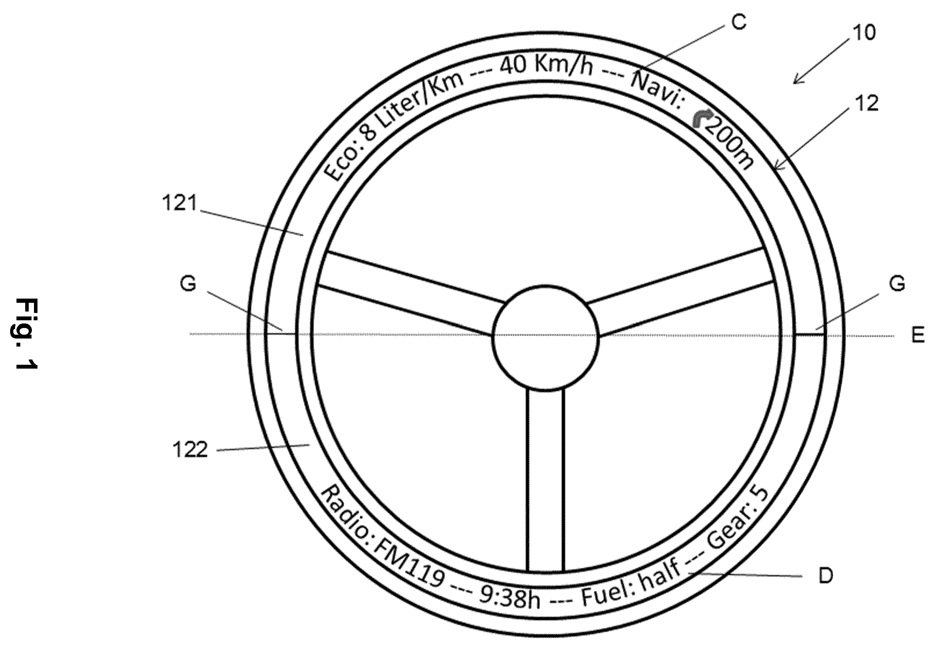

Referring to Fig. 1, an embodiment of a display device 12 for a steering wheel 10 is depicted at its default position. To be used with the steering wheel 10, the display device 12 has a shape of a ring.

The display device 12 has an upper zone 121 and a bottom zone 122. As shown in the embodiment in Fig. 1, the upper zone 121 is displayed with information content C, preferably the information connecting to the current driving situation, and the bottom zone is displayed with information content D, preferably information that is of less priority to the current driving situation.

It is also preferred that the information content C and D are rendered centrically with respect to the upper zone 121 and the bottom zone 122. In this way, it is easier and more straight-forward for a driver to read and understand the information contents.

The information contents C and D can be text, characters, symbols, graphs, or any combination thereof. In addition, the information contents C and D are both displayed and aligned vertically with respect to a horizontal reference line E, which is preferably in line with the middle diameter of the ring of the display when the display is at its default position. In other words, the information contents C and D needs to be flipped vertically between the top and bottom zones 121, 122 so that both of the displayed contents in the top and bottom zones 121, 122 can be read correctly. The flipping of the information contents C and D is preferably performed with respect to the reference line E. In addition, G are the physical fitting points of an upper 180° type display and a lower 180° type display. It should be noted that the reference line E and the fitting points G are virtual and are introduced here merely for a clearer explanation of the embodiment.

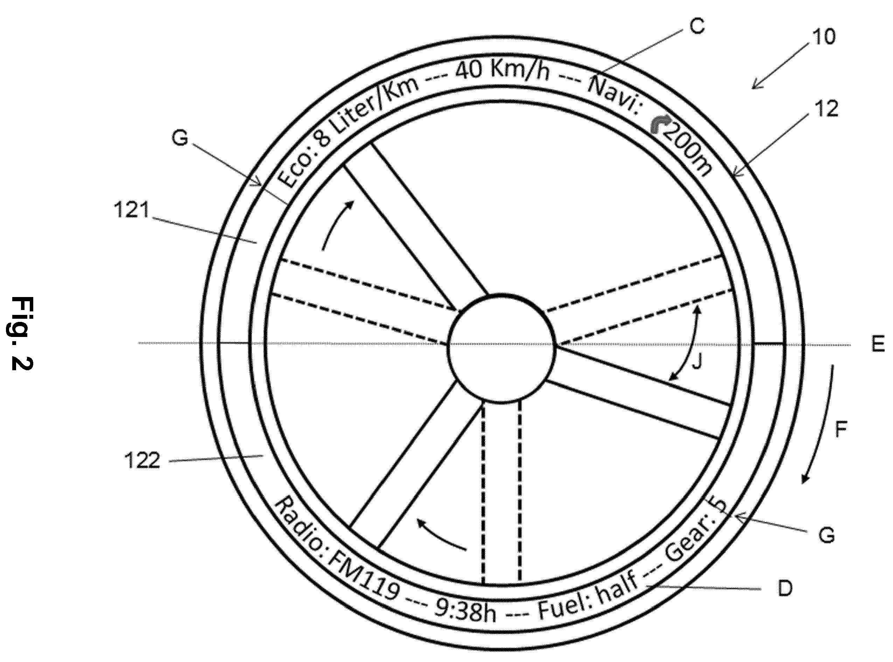

Fig. 2 depicts the same steering wheel 10 with the display 12, where the both are turned clockwise with respect to reference line E and along a direction F with an angle J. It can be seen that the fitting points G are physically rotated as well. With the rotation of the steering wheel 10, the information contents C and D are still displayed and rendered centrically and respectively in the upper zone 121 and the bottom zone 122.

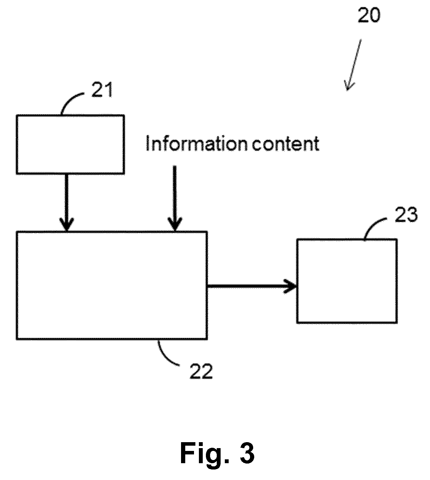

Fig. 3 schematically depicts one exemplary embodiment of a system 20 configured to provide the display 12 for a steering wheel 10 as described above. The system 20 comprises an angle measurement unit 21, a rendering unit 22 and a display unit 23. The angle measurement unit 21 is configured to identify a rotation angle J of the steering wheel 10 and the display 12. The rendering unit 22 is configured to receive the measured angle J from the angle measurement unit 21 and information content to be displayed to render final images to the display unit 23, e.g., the display 12 as described above, at a right position.

The angle measurement unit 21 can be optionally an inertial measurement unit (IMU) or an appropriate encoder unit in a steering column.

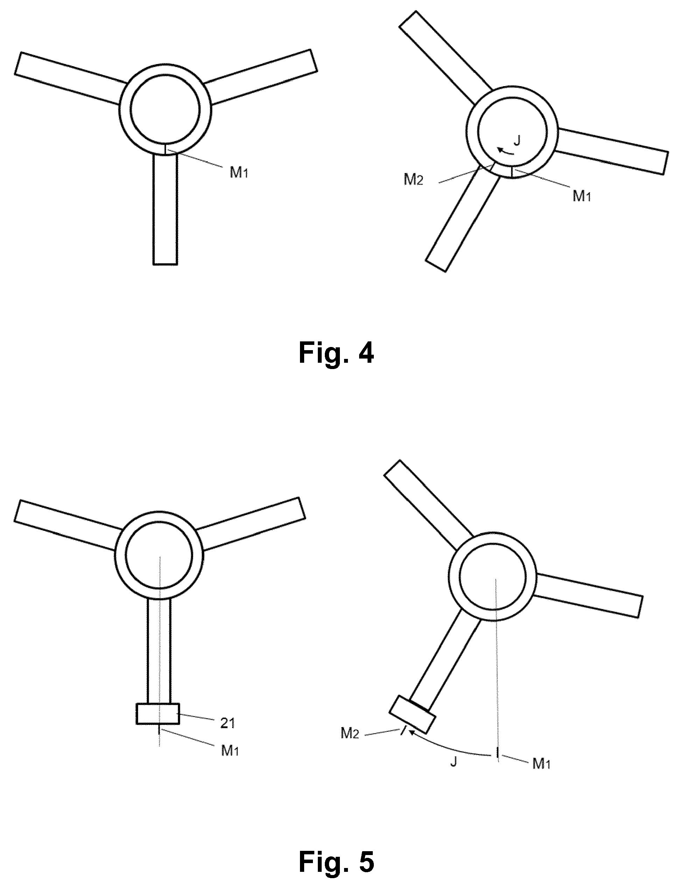

Fig. 4 shows an exemplary standard encoder for angle determination for a steering wheel. $M_1$ is the marking position of a marking point M before the steering wheel is turned. Upon a turning of the steering wheel, the marking point M is moved from $M_1$ to $M_2$, and the corresponding angle J is thus measured.

Fig. 5 shows an exemplary standard IMU acceleration measurement unit 21. Similar to the above described encoder, a position $M_1$ of a marking point M is recorded. Upon turning the steering wheel, the IMU unit measures the rotation angle J according to the first position $M_1$ and the second position $M_2$ of marking point M.

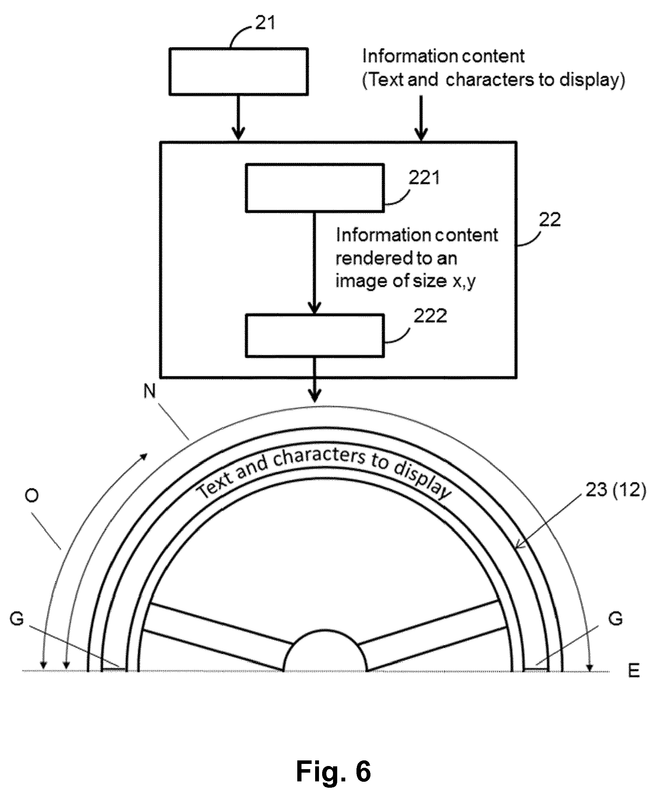

Fig. 6 shows an example illustrating how the system 20 shown in Fig. 3 works. This example focuses on the upper zone 121 of the display 12. It should be understood by the skilled person in the art that the same technology and methods can be applied to the lower zone 122 of the display 12 as well.

Preferably, the rendering unit 22 of the system 20 comprises a calculation unit 221 and a display driver unit 222. The calculation unit 221 is configured to calculate absolute position where the information content is to be rendered. The display driver unit 222 is usually offered by a display vendor or a third party manufacturer that applies a rendered rectangular image to a specific and corresponding type of display. In this embodiment, the display 12 comprises two 180° type displays each corresponding to the upper zone and the bottom zone 121, 122 as described in Figs. 1 and 2. These two 180° type are separated with respect to and at the fitting points G.

For the calculation unit 221 to calculate the absolute position, it is assumed that the maximum possible image

resolution $x_{max}$ for the horizontal direction and $y_{max}$ for the vertical direction of the display are known. Inputs to the calculation unit 221 are the rotation angle of the steering wheel J and the information content to be displayed. For example, as shown in Fig. 6, the information content to be rendered is "Text and characters to display". The calculation unit 221 analyze the x-resolution of the text to be rendered as $x_{textsize}$. In order to render the text in the middle of the display, the offset $x_{offset}$ needs to be calculated as well depending on $x_{max}$ and $x_{textsize}$.

$$x_{offset} = \frac{x_{max} - x_{textsize}}{2}$$

In order to render every horizontal position $x$ of a text, the text needs to be mapped on real horizontal display coordinates $x'$:

$$x' = x + x_{offset} - J\frac{x_{max}}{2}, where \begin{cases} 0 \le x \le x_{max} \\ 0 \le J \le \pi \end{cases}$$

In case $x'$ becomes negative, the corresponding part of the text needs to be rendered to the other part of the display, i.e. the bottom 180° type of display.

The shift with respect to the reference line E and the physical fitting points G are as following:

$$E = G - J\frac{x_{max}}{\pi}.$$

In the exemplary embodiment of Fig. 6, the display driver unit 222 maps $x_{max}$ of a rectangular image to $N$ for the 180° display and $x_{offset}$ to $0$, where N is defined as the maximum size of the ring shaped 180° display (physical mapping of $x_{max}$) and O is defined as the offset in the ring shaped 180° display (physical mapping of $x_{offset}$).

The foregoing illustrates the principles of the disclosure and it will thus be appreciated that those skilled in the art will be able to devise numerous alternative arrangements which, although not explicitly described herein, embody the principles and are within its scope. It is therefore to be understood that numerous modifications can be made to the illustrative embodiments and that other arrangements can be devised without departing from the scope of the present principle as defined by the appended claims.

**Claims**

1. A display device (12) for a steering wheel (10), the display device (12) having a shape of a ring and comprising an upper zone (121) and a bottom zone (122) for displaying information content, wherein the displayed information content in the upper zone (121) and in the bottom zone (122) are both vertically aligned with respect to the display device (12).

2. The display device (12) of claim 1, wherein the information content displayed in the upper zone (121) and the information content displayed in the bottom zone (122) are vertically flipped with respect to each other.

3. The display device (12) of claim 1 or 2, wherein, when the display device is turned or rotated, the information content in the upper zone and bottom zone are still centrically displayed.

4. The display device (12) of one of the preceding claims, wherein the display device (12) is split up to an upper 180° display type and a lower 180° display type with respect to fitting points (G) of the display device.

5. The display device (12) of claim 4, where if parts of the information content rendered to a 180° display type exceeds the fitting points of the display, the parts of the information content is rendered to the other 180° display type.

6. A system (20) configured to display information content on a steering wheel (10), the system comprising:

    - an angle measurement unit (21) configured to identify a rotation angle of the steering wheel,
    - a rendering unit (22) configured to receive the measured rotation angle and the information content to be displayed, and
- a display device as claimed in one of the preceding claims.

7. The system of claim 6, where in the angle measurement unit (21) is an inertial measurement unit or an encoder unit in a steering column.

**Fig. 1**

Fig. 2

**Fig. 3**

M1

J

M2

M1

**Fig. 4**

21

M1

M2

J

M1

**Fig. 5**

Fig. 6

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/143505 A1 (MARUYAMA SHUJI [JP] ET AL) 19 June 2008 (2008-06-19) | 1-4,6,7 | INV. B62D1/06 |
| A | * paragraph [0059] - paragraph [0084]; claims 15,16; figures 10-18 * | 5 | ADD. B62D1/04 |
| X | CN 204 172 972 U (BAIC MOTOR CO LTD) 25 February 2015 (2015-02-25) | 1-4,6 | |
| A | * paragraph [0021] - paragraph [0028]; figures 1-5 * | 5,7 | |
| X | DE 103 46 691 A1 (VOLKSWAGEN AG [DE]) 12 May 2005 (2005-05-12) * paragraphs [0019], [0020], [0034]; claims 13-14; figure 6 * | 1-7 | |
| A | WO 2015/005587 A1 (R & DERS CO LTD [KR]) 15 January 2015 (2015-01-15) * paragraphs [0063] - [0068], [0081]; figures 1-7 * | 1-7 | |
| A | US 5 666 102 A (LAHIFF JOHN E [US]) 9 September 1997 (1997-09-09) * the whole document * | 1-7 | TECHNICAL FIELDS SEARCHED (IPC) B62D B60K |

The present search report has been drawn up for all claims

| Place of search | Date of completion of the search | Examiner |
|---|---|---|
| The Hague | 27 July 2016 | Signorini, Luca |

EPO FORM 1503 03.82 (P04C01)

## ANNEX TO THE EUROPEAN SEARCH REPORT
## ON EUROPEAN PATENT APPLICATION NO.

EP 16 30 5156

This annex lists the patent family members relating to the patent documents cited in  the above-mentioned European search report.
The members are as contained in the European Patent Office EDP file on
The European Patent Office is in no way liable for these particulars which are merely given for the purpose of information.

27-07-2016

| Patent document cited in search report | | Publication date | Patent family member(s) | Publication date |
|---|---|---|---|---|
| US 2008143505 | A1 | 19-06-2008 | DE 102007060347 A1<br>JP      5495355 B2<br>JP   2008150029 A<br>US   2008143505 A1 | 19-06-2008<br>21-05-2014<br>03-07-2008<br>19-06-2008 |
| CN 204172972 | U | 25-02-2015 | NONE | |
| DE 10346691 | A1 | 12-05-2005 | NONE | |
| WO 2015005587 | A1 | 15-01-2015 | CN      105377611 A<br>EP      3020589 A1<br>KR      101317205 B1<br>US   2016159386 A1<br>WO   2015005587 A1 | 02-03-2016<br>18-05-2016<br>10-10-2013<br>09-06-2016<br>15-01-2015 |
| US 5666102 | A | 09-09-1997 | US      5666102 A<br>WO      9803365 A1 | 09-09-1997<br>29-01-1998 |

EPO FORM P0459

For more details about this annex : see Official Journal of the European Patent Office, No. 12/82